(19) Europäisches Patentamt
European Patent Office
Office européen des brevets

(11) Publication number : **0 456 611 B1**

(12) # EUROPEAN PATENT SPECIFICATION

(45) Date of publication of patent specification :
**16.03.94 Bulletin 94/11**

(51) Int. Cl.$^5$ : **C08F 220/60,** G02B 1/04

(21) Application number : **91810338.3**

(22) Date of filing : **01.05.91**

(54) **Hydroxyethyl cellulose derivatives containing pendant (meth)acryloyl units bound through urethane groups and hydrogel contact lenses made therefrom.**

(30) Priority : **10.05.90 US 521803**

(43) Date of publication of application :
**13.11.91 Bulletin 91/46**

(45) Publication of the grant of the patent :
**16.03.94 Bulletin 94/11**

(84) Designated Contracting States :
**AT BE CH DE DK ES FR GB GR IT LI LU NL SE**

(56) References cited :
**EP-A- 0 216 074**
**EP-A- 0 321 882**
**EP-A- 0 362 137**

(73) Proprietor : **CIBA-GEIGY AG**
**Klybeckstrasse 141**
**CH-4002 Basel (CH)**

(72) Inventor : **Harisiades, Paul**
**76-09 85th Road**
**Woodhaven, N.Y. 11421 (US)**
Inventor : **Rennwantz, Ellen**
**75 Pocantico Street**
**North Tarrytown, N.Y. 10591 (US)**

**EP 0 456 611 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Hydroxyethyl Cellulose Derivatives Containing Pendant (Meth)Acryloyl Units Bound Through Urethane Groups and Hydrogel Contact Lenses Made Therefrom

The instant invention relates to hydroxyalkylated cellulose derivatives containing pendant (meth)acryloyl units bound to the cellulose backbone, through urethane groups, which are further reacted with a conventional vinylic monomer, and which can be crosslinked to form soft hydrogel contact lenses possessing high oxygen permeability, wettability and mechanical strength.

Vision correction lenses such as contact lenses and intraocular lenses have been known as commercial products for over 25 years. An acceptable lens must be optically clear, mechanically stable, and must provide sufficient optical correction, gas permeability and wettability to insure that the lens is comfortable and safe during use. Gas permeability is important since the corneal surface of the eye respires by obtaining oxygen and other substances from tear fluid and by releasing carbon dioxide and other products of respiration into tear fluid. The intimate contact and position of the contact lens can substantially prevent the exchange of such constituents between the corneal epithelial cells and tear fluid. As a result the cornea can become starved for oxygen and can accumulate harmful amounts of metabolites within the constituent cells. This can result in corneal edema (swelling) and often extreme discomfort to the wearer. Wettability of the lens is important because a nonwettable lens can be abrasive and irritating to the eye and lid and can cause significant wearer discomfort. A lens must have sufficient mechanical integrity to allow for easy cleaning and handling and maintaining the desired curvature and correction for the individual user. The lens should be immunologically compatible with the eye, reducing chances of allergic reaction or toxic response. Further the lens should be permanently dyeable, easily manufactured and available at low cost.

In the past contact lenses have been made from synthetic polymeric materials such as plastic matrices based on polyacrylates, polymethacrylates, poly(hydroxyethyl methacrylate), cellulose acetate butyrate, silicones, etc. More recently contact lenses have been made from collagen, a naturally occurring protein. Miyata, US-A-4,223,984 is primarily directed to a contact lens made from solubilized defatted transparent crosslinked collagen. Miyata, US-A-4,260,228 is particularly directed to an improved collagen gel soft contact lens prepared from an aldehyde crosslinked gel containing a polyhydroxy compound such as glucose. Miyata, US-A-4,264,155 is primarily directed to an improved lens made from collagen gel to which a water soluble organic polyhydroxy polymer has been added.

Ivani, US-A-4,365,000 discloses certain polymeric amino-polysaccharide compositions used in the fabrication of contact lenses which are limited to graft and block copolymers of an acetyl glycosamine in combination with compounds selected from the group consisting of silicone collagen, acrylonitrile, acrylamide, alkyl methacrylates, alkylamino alkylmethacrylates, hydroxyalkyl methacrylates, pyrrolidones and vinyl derivatives of pyrrolidone.

Allan, US-A-4,532,267 teaches a method for the production of hard or soft contact lenses based on the aminopolysaccharide, chitin.

Cellulose esters, especially cellulose acetate butyrate, have been disclosed for contact lens applications. These are not hydrogel materials, have relatively low oxygen permeabilities, and are not dimensionally stable. Cellulose acetate butyrate (CAB) contact lenses are disclosed in US-A-3,900,250. Harris et al., US-A-4,116,549 disclose a (CAB) lens material with an anti-warping treatment.

Neefe, US-A-4,231,905 discloses a contact lens formed by dissolving a cellulose ester or ether in methyl methacrylate followed by polymerization.

Wittmann et al., US-A-4,395,496 improved the dimensional stability of CAB by crosslinking it with trialkoxysilane methacrylates and diacrylates.

Loshack et al., US-A-4,111,535 disclose a cellulose acetate propionate lens plasticized with dihexyl acrylate.

Lenses made from polymer blends of cellulose esters and ethylene/vinyl acetate have been disclosed with improved wettability compared to CAB lenses. Wingler, US-A-4,532,277 blends cellulose acetate butyrate with ethylene/vinyl acetate (EVA) to make a lens with 2% water content.

While cellulosics and polysaccharides bearing hydroxyl groups have been crosslinked with epichlorohydrin, diepoxides, acetals, diisocyanates, divinyl sulfone, and other hydroxyl reactive groups, hydrogel contact lenses composed of crosslinked hydroxyethyl cellulose are not disclosed in the prior art.

Previously, hydroxyethyl cellulose has been crosslinked with hydroxyl reactive groups such as epoxides, formaldehyde, glyoxal, dimethylol urea and the like.

Zemek et al., Synth. Polymer. Membr., Proc. Microsymp. Macromol., 29th, 1986, 463-469, synthesized membranes of hydroxyethyl cellulose by crosslinking it with 2-chloromethyl oxirane.

Masuda, JP-A2-61/244,369, discloses polysaccharide gels crosslinked with diepoxides.

Pokludova and Smejkal, Kozarstvi, 35 (11), 329-334 crosslink hydroxyethyl cellulose for use in leather finishing, with Depremol M (4,5-dihydroxy-N,N'-dimethylolethylene urea).

Block, US-A-4,473,479, crosslinks hydroxyethyl cellulose with glyoxal.

Stresinka et al., CS-B-201,185 disclose the use of 1 to 4 divalent hydroxamine acids as masked isocyanates for the crosslinking of hydroxyethyl cellulose.

Block, US-A-4,366,070, reacts hydroxyethyl cellulose with formaldehyde to give a crosslinked system with good fluid loss and pseudoplasticity.

Shitama et al., JP-A-54/22949 describe the manufacture of microcapsules by crosslinking hydroxyethyl cellulose with hexamethylene diisocyanate.

Pastyr and Kuniak, CS-172,160, describe a method for crosslinking hydroxyethyl cellulose fibers using dimethylolurea and glyoxal at 80° to 130°C.

Pikler et al., CS-166,076, crosslink hydroxyethyl cellulose with alkyl or aryl phosphites in dimethyl sulfoxide.

Pikler and Piklerova, CS-166,529, crosslink hydroxyethyl cellulose with Ce (IV) salts in the preparation of fibers and films with decreased water absorption.

The chemical reaction between hydroxyethyl cellulose and 2-isocyanatoethyl methacrylate in dimethyl sulfoxide had not been disclosed in the prior art. Ethylenically unsaturated cellulose esters have been disclosed by Grant, US-A-4,565,857, for coating applications. In this case, the reaction of cellulose acetate butyrate containing 4.3% hydroxyl groups with 2-isocyanatoethyl methacrylate is used to make protective coatings for wood and other substrates.

Rama et al., US-A-3,782,950, describe the reaction of hydroxypropyl cellulose with 2-isocyanatoethyl methacrylate for a reactive-type coating.

Goldenberg, US-A-4,665,123 describes hydrogel contact lenses made from polyvinyl alcohol derivatives reacted with 2-isocyanatoethyl methacrylate in dimethyl sulfoxide solution and actinically crosslinked with (meth)acrylic monomers.

It is a further object of this invention to provide a means of crosslinking hydroxyethyl cellulose that provides crosslinked products of high mechanical strength at high water contents.

It is an object of this invention to provide cellulosic derivatives containing e.g. pendant (meth)acryloyl groups which are further reacted with a conventional vinylic monomer, and crosslinked to form a soft water-swellable hydrogel contact lens having high mechanical strength, high water content, superior optical clarity and high oxygen permeability.

It is a further object of the present invention to provide aqueous swollen contact lenses obviating, or substantially reducing, the drawbacks of the prior art.

It is a further object of the present invention to provide a method for preparing such contact lenses by crosslinking such cellulosic polymer containing e.g. (meth)acryloyl unit-vinylic monomer reaction products in an organic aprotic solvent in a mold, such as a spin cast mold or a static cast mold, and equilibrating the resulting aprotic solvent swollen contact lens in an aqueous medium.

The instant invention provides an organic aprotic solvent insoluble highly wettable polymer which is the copolymerization product of (A) a derivative of hydroxyethyl cellulose, with a degree of substitution (D.S.) value of 0.5 to 3.0 and a molar substitution (M.S.) value of 1.5 to 3.0, and having a weight average molecular weight of at least 10,000, containing between about 0.5 and 90 percent, based on the total number of hydroxyl groups on said hydroxyethyl cellulose, of a repeating structural unit of the formula I

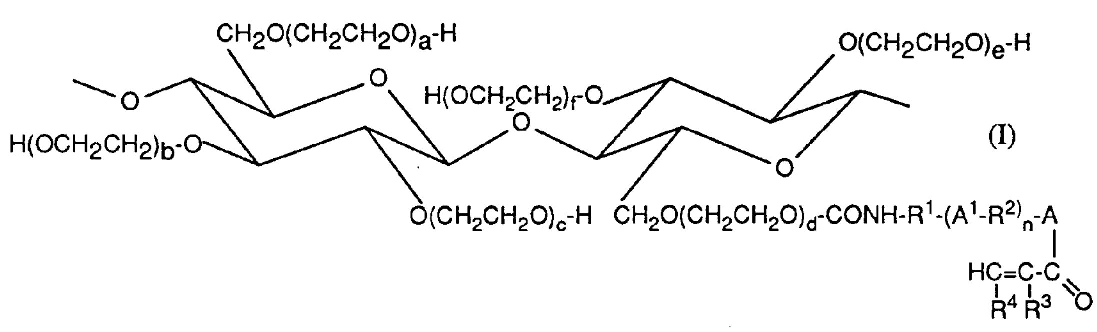

(I)

wherein

a+b+c+d+e+f≧3, with a urethane bond at any one or more of the six possible hydroxyl positions,

$R^1$ and $R^2$ are independently straight or branched chain alkylene of 2 to 8 carbon atoms, arylene of 6 to 12 carbon atoms, a saturated cycloaliphatic divalent group of 6 to 15 carbon atoms, aralkylene of 7 to 14 carbon atoms, or aralkarylene of 13 to 16 carbon atoms; preferably alkylene of 2 to 8 carbon atoms;
n is 0 or 1;
$A^1$ is -NH-CO-O- or -NH-CO-NR'- where R' is hydrogen or lower alkyl;
A is -O-, -NH- or -NH-CO-NR"- where R" is hydrogen or lower alkyl;
$R^3$ is hydrogen or methyl; and
$R^4$ is hydrogen, methyl or $-COOR^5$ where $R^5$ is hydrogen or lower alkyl;
with the proviso that if $R^3$ is methyl, $R^4$ is hydrogen;
and (B) a vinylic monomer
where for each repeating structural unit of formula I there are 0.01 to 80 repeating structural units derived from the vinylic monomer.

When $R^1$ or $R^2$ are alkylene, they may be straight or branched chain, preferably of 2 to 6 carbon atoms, more preferably straight chain alkylene, and most preferably ethylene. Suitable examples include ethylene, propylene, butylene, hexylene and dimethylethylene.

Where $R^1$ or $R^2$ are arylene, they are preferably phenylene which is unsubstituted or substituted by lower alkyl or lower alkoxy, and more preferably 1,3- or 1,4-phenylene.

Where $R^1$ or $R^2$ are a saturated cycloaliphatic divalent group, such group preferably is cyclohexylene or cyclohexylmethylene which is unsubstituted or substituted by one or more methyl groups, such as the isophorone divalent radical.

Where $R^1$ or $R^2$ are aralkylene, the aryl moiety thereof is preferably phenylene which is unsubstituted or substituted by lower alkyl, e.g. methyl or lower alkoxy, e.g. methoxy and the alkylene moiety thereof is preferably lower alkylene, such as methylene or ethylene, most preferably methylene.

The divalent group $A^1$-$R^2$ is present when n is 1 and absent when n is zero. Those polymers wherein n is 0 are preferred.

$A^1$, when present, is preferably bonded via the NH-nitrogen to $R^1$ and is preferably carbamoyloxy (-NH-CO-O-). When $A^1$ is a ureido (-NH-CO-NR'-), R' is preferably hydrogen.

A is preferably -O- or -NH-, more preferably -O-. When A is ureido, R" is preferably lower alkyl.

$R^3$ is preferably methyl.

$R^4$ is preferably hydrogen. Where $R^3$ is hydrogen, $R^4$ is methyl or $-COOR^5$, where $R^5$ is preferably methyl or ethyl.

Groups and residues designated as "lower", such as e.g. lower alkyl, have preferably up to seven carbon atoms, more preferably up to four carbon atom.

A preferred embodiment is a polymer of components (A) and (B) wherein component (A) is a derivative of hydroxyethyl cellulose containing between 10 and 50 %, based on the total number of hydroxyl groups on said hydroxyethyl cellulose, of a repeating structural unit of the formula I where $R^1$ is ethylene, n is 0 (zero), A is -O- (oxa), $R^3$ is methyl and $R^4$ is hydrogen, and a contact lens made therefrom.

The hydroxyethyl cellulose derivatives containing units of formula I are easily prepared by reacting a hydroxyethyl cellulose, with a D.S. value of 0.5 to 3.0 and an M.S. value of 1.5 to 3.0, and having a weight average molecular weight of at least 10,000, containing i.e. units of formula II

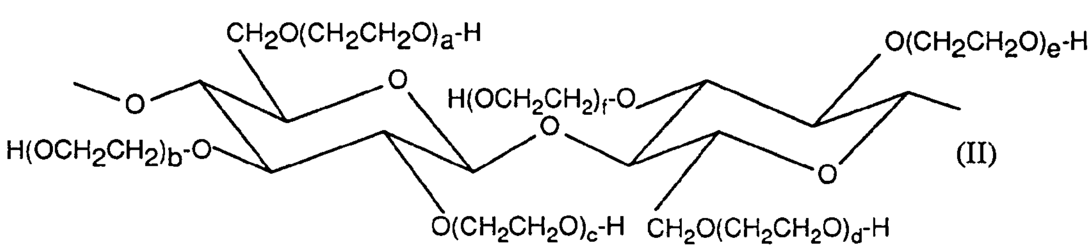
(II)

with 0.5 to 90 percent, based upon the total number of hydroxyl groups in said hydroxyethyl cellulose of an isocyanate of formula III

$$OCN-R^1-(A^1-R^2)_n-A-CO-C(R^3)=CHR^4 \qquad (III)$$

wherein $R^1$, $R^2$, n, A, $A^1$ and $R^3$ are as above defined, and $R^4$ is hydrogen, methyl or $-COOR^5$ where $R^5$ is lower alkyl, e.g. at a temperature between -10°C to 100°C in the presence of a conventional aprotic solvent, in the further presence or absence of a catalytic amount of a urethane catalyst.

To obtain those hydroxyethyl cellulose polymer derivatives containing units of formula I wherein $R^5$ is hy-

drogen, the corresponding polymers wherein $R^5$ is lower alkyl can subsequently be treated with aqueous base, such as an alkali metal hydroxide aqueous solution, at an elevated temperature, e.g. between 40 and 80°C, followed by neutralization of the resulting carboxylate salt with an acid, such as aqueous hydrochloric acid under ambient conditions.

Suitable aprotic solvents for conducting the reaction between the units of formula II and the isocyanate of formula III include acid amides such as formamide, N,N-dimethylformamide, phosphoric acid tri-dimethylamide, N-methyl-2-pyrrolidone, N,N-dimethylacetamide, acetamide, or nitriles, e.g. acetonitrile and preferably a sulfoxide, such as dimethyl sulfoxide.

Suitable urethane catalysts include tertiary amines, such as trimethylamine, triethylamine, N,N-dimethylbenzylamine, or an organometallic urethane catalyst, such as stannous octoate or dibutyltin dilaurate, or sodium acetate.

Hydroxyethyl celluloses containing units of formula II are widely available.

By hydroxyethyl cellulose is meant cellulose which has been swelled in caustic and reacted with ethylene oxide. The manner in which ethylene oxide is added to cellulose can be described by the terms degree of substitution (D.S.) and molar substitution (M.S.). The degree of substitution designates the average number of hydroxyl positions on the anhydroglucose unit that have reacted with ethylene oxide (See formula II). Molar substitution is defined as the average number of ethylene oxide molecules that have reacted with each anhydroglucose unit. In the instant invention D.S. is at least 0.5 and maximally 3.0 and preferably 0.9 to 1.0. The CELLOSIZE (Union Carbide) hydroxyethyl cellulose used in the examples has an M.S. value of about 2. The M.S. for hydroxyethyl cellulose is generally in the range of 1.5 to 3.0.

Preferably, the hydroxyethyl cellulose has a weight average molecular weight of at least 10,000. As an upper limit, the hydroxyethyl cellulose may have a weight average molecular weight of 500,000. Preferably, the HEC has a weight average molecular weight of up to 350,000, more preferably up to 200,000, and most preferably up to 120,000.

The isocyanates of formula III are known, or are easily prepared by conventional methods well known in the art (see US-A-2,958,704).

Where, in the compounds of formula III, n equals 1, the isocyanates can be prepared, for example, by reacting substantial equimolar amounts of a compound of the formula:

$$OCN\text{-}R^1\text{-}NCO \qquad (IV)$$

with a compound of the formula

$$A^2\text{-}R^2\text{-}A\text{-}CO\text{-}C(R^3)=CHR^4 \qquad (V)$$

where $A^2$ is HO- or R'-NH- and $R^2$, A, $R^3$ and $R^4$ are as above defined. Occassionally, it is desirable to employ a substantial excess of the diisocyanate of formula IV in this reaction, in order to minimize the formation of by product, and subsequently isolate the compound the formula III from the resulting reaction mixture by precipitation thereof, or by distilling off the excess isocyanate. The reaction between the compound IV and compound V can be conducted at a temperature between about 0°C and 100°C in the presence or absence of an inert solvent. Suitable solvents include toluene, cyclohexane, methyl acetate, ethyl acetate, tetrahydrofuran, isopropyl acetate, diethyl ether and the like. If desired, the reaction between compounds of formula IV and V may be conducted in the presence of a urethane catalyst of the type described above.

The compounds of formula IV and V are well known in the art. Suitable diisocyanates of formula IV include hexane-1,6-diisocyanate, tetramethylene diisocyanate, phenylene-1,4-diisocyanate, toluene-2,4-diisocyanate, toluene-2,6-diisocyanate, isophorone diisocyanate, cyclohexane-1,4-diisocyanate, and the like.

Suitable compounds of formula V include 2-hydroxyethyl acrylate, 2-hydroxypropyl acrylate, 4-hydroxyphenyl methacrylate, 2-hydroxyethyl maleate, 2-hydroxyethyl methacrylate, 2-tert.-butylaminoethyl methacrylate, and the like.

Many of the compounds of formula III wherein n is 0 are known or can be prepared by methods known in the art. Known compounds include 2-isocyanatoethyl methacrylate, 2-isocyanatoethyl acrylate, 3-isocyanatopropyl methacrylate, 4-isocyanatobutyl acrylate and methacrylate, 6-isocyanatohexyl acrylate and methacrylate, 1-methyl-2-isocyanatoethyl methacrylate and 1,1-dimethyl-2-isocyanatoethyl acrylate.

The compounds of formula III wherein n is 0 can generally be prepared by esterification of acryloyl or methacryloyl chloride with substantially equal molar amounts of the appropriate amine of formula (VI)

$$H_2N\text{-}R^1\text{-}(A^1\text{-}R^2)_n\text{-}OH \qquad (VI)$$

under acidic conditions followed by phosgenation, as described in US-A-2,821,544. The compounds of formula (VI) are conventional and well known in the art. More specifically, the esterification reaction as well as the phosgenation reaction is run using an inert, dry, high-boiling solvent such as toluene, xylene, chlorobenzene or dichlorobenzene at 50°C to 200°C for 1 to 20 hours. The alkanolamine can either be added in the salt form, preferably as the hydrochloride salt, or the free form with the solvent saturated with the dry acid e.g. dry hydrogen chloride gas. After formation of ester, excess phosgene is passed into or over the rapidly stirring suspension (or solution) at 50° to 200°C for 1 to 20 hours until evolution of hydrogen chloride ceases. The product is isolated by distillation.

The vinylic monomer (B) may be hydrophilic, hydrophobic or may be a mixture of hydrophilic and hydrophobic vinylic monomers. Suitable vinylic monomers include those conventional vinylic monomers generally employed in the fabrication of soft and hard contact lenses. By a hydrophilic vinylic monomer is meant a monomer which when polymerized by conventional free radical polymerization, characteristically, yields a polymer which either dissolves in water or is capable of absorbing at least 10 % by weight water under ambient equilibrium conditions. Similarly, suitable hydrophobic vinylic monomers are those monomers which, when polymerized by conventional free radical polymerization, characteristically yield a polymer which neither dissolves in water, nor is capable of absorbing at least 10 % by weight water under ambient (i.e. 20°C) equilibrium conditions.

In general, between 0.01 and about 80 units of conventional hydrophobic and/or hydrophilic monomer is reacted per unit of formula I.

The polymers of the instant invention preferably contain at least 1 to 50 percent, based on the total number of hydroxyl groups on the hydroxyethyl cellulose, of units of formula I, which are reacted with 0.01 to 80 units of conventional vinylic monomer.

In one preferred sub-embodiment of the instant invention, the hydroxyethyl cellulose derivative contains at least 10 to 50, preferably between 12 to 27 percent, based on the number of hydroxyl groups on said hydroxyethyl cellulose of units of formula I, which are reacted with 0.01 to 80 units of a vinylic monomer per unit of formula I, more preferably between 0.5 and 30 units of vinylic monomer per unit of formula I, and most preferably between 2 and 20 units of vinylic monomer per unit of formula I present in the hydroxyethyl cellulose polymer. In the preferred sub-embodiment, it is generally desirable to employ a hydrophobic vinylic monomer as the monomer reactant, or alternatively, a mixture of hydrophobic and hydrophilic monomers containing at least 50 weight percent of hydrophobic monomer, based on total monomer, being employed. The added hydrophobic monomer, or monomer mixture containing predominantly hydrophobic monomer, has been found to increase the mechanical strength of the ultimate final product soft contact lens material, to reduce the amount of water contained in the contact lens material, and reduce the pore size of the contact lens material, thereby reducing the rate of accumulation of proteinaceous and non-proteinaceous debris associated with the normal day-to-day wearing and handling of contact lenses. Surprisingly, and most unexpectedly, the introduction of hydrophobic monomer, or monomer mixture containing at least 50 mole percent hydrophobic monomer, to the hydrophilic hydroxyethyl cellulose containing units of formula I does not, upon reaction, result in phase separation of the reaction product. Rather the product is optically clear, indicating substantially no phase separation.

As the percent of formula I units increase, from about 1 % to about 50 %, based upon the total number of hydroxyl groups in the hydroxyethyl cellulose, the added vinylic monomer reacted therewith is generally increasingly hydrophilic in character for an optimum balance of performance characteristics in terms of mechanical strength, water content, surface wettability and oxygen permeability.

The vinylic monomers are reacted with the hydroxyethyl cellulose derivative of formula I advantageously in the presence of an inert diluent or solvent, such as a suitable organic solvent, including a lower alkanol, e.g. ethanol, methanol or the like, or an aprotic solvent such as N,N-dimethylformamide, acetamide, acetonitrile, N,N-dimethylacetamide, dimethyl sulfoxide or mixtures thereof. Also, aqueous/organic solvent systems may be employed.

The vinylic monomer, or blend of vinylic monomers, are combined with the hydroxyethyl cellulose derivative of formula I and polymerized in the presence of actinic radiation or in the presence of a conventional free radical initiator, such as a peroxide, e.g. di-tert.-butyl peroxide, benzoyl peroxide, lauryl peroxide, decanoyl peroxide, acetyl peroxide, succinic acid peroxide, methyl ethyl ketone peroxide, 2,4-dichlorobenzoyl peroxide, isopropyl peroctoate, tert.-butyl hydroperoxide, tert.-butyl perpivalate, tert.-butyl peroctoate, diisopropyl peroxydicarbonate, cumene hydroperoxide, tert.-butyl perbenzoate, tert.-butyl peroxymaleic acid, tert.-butyl peroxyacetate, and potassium persulfate; an azo compound e.g. 2,2'-azo-bis-isobutyronitrile, 2,2'-azo-bis-(2,4-dimethylvaleronitrile), 1,1'-azo-bis-(cyclohexane carbonitrile), 2,2'-azo-bis(2,4-dimethyl-4-methoxy-valeronitrile) and phenyl-azoisobutyronitrile; a photoinitiator e.g. benzoin methyl ether and 1-hydroxycyclohexyl phenyl ketone or actinic radiation such as UV light or ionizing rays e.g. gamma rays or X-rays.

Suitable vinylic monomers for polymerization with the derivative of formula I include conventional hydrophobic and hydrophilic monomers. Suitable hydrophobic monomers include, without limitation, $C_1$ to $C_{18}$ alkyl acrylates and methacrylates, preferably $C_1$ to $C_7$ alkyl acrylates and methacrylates, $C_8$ to $C_{18}$ alkyl acrylamides and methacrylamides, acrylonitrile, methacrylonitrile, vinyl $C_1$ to $C_{18}$ alkanoates, $C_2$ to $C_{18}$ alkenes, $C_2$ to $C_{18}$ haloalkenes, styrene, $C_1$ to $C_6$ alkyl styrenes, vinyl alkyl ethers wherein the alkyl portion has 1 to 6 carbon atoms, $C_3$ to $C_{12}$ perfluoroalkyl-ethyl-thiocarbonylaminoethyl acrylates and methacrylates, $C_3$ to $C_{12}$-fluoroalkyl acrylates and methacrylates, acryloxy and methacryloxy-alkyl-siloxanes, N-vinyl carbazole, $C_1$ to $C_{12}$ al-

kyl esters of maleic, fumaric, itaconic, and mesaconic acids and the like. Examples of suitable hydrophobic monomers include methyl acrylate, ethyl acrylate, propyl acrylate, isopropyl acrylate, cyclohexyl acrylate, 2-ethylhexyl acrylate, methyl methacrylate, ethyl methacrylate, propyl methacrylate, vinyl acetate, vinyl propionate, vinyl butyrate, vinyl valerate, styrene, chloroprene, vinyl chloride, vinylidine chloride, acrylonitrile, 1-butene, butadiene, methacrylonitrile, vinyl toluene, vinyl ethyl ether, per-fluorohexylethylthiocarbonylaminoethyl methacrylate, isobornyl methacrylate, hexafluorobutyl methacrylate, 3-methacryloxypropylpentamethyldisiloxane and bis(methacryloxypropyl) tetramethyldisiloxane.

Suitable hydrophilic monomers include, without limitation, hydroxy substituted lower alkyl acrylates and methacrylates, acrylamide, methacrylamide, $C_1$ to $C_2$ lower alkyl acrylamide and methacrylamide, ethoxylated acrylates and methacrylates, hydroxy substituted lower alkyl acrylamide and methacrylamide, hydroxy substituted lower alkyl vinyl ethers, sodium ethylene sulfonate, sodium styrene sulfonate, 2-acrylamido-2-methylpropanesulfonic acid, N-vinylpyrrole, N-vinyl-succinimide, N-vinyl pyrrolidone, 2- and 4-vinyl pyridine, acrylic acid, methacrylic acid, amino (by amino including quaternary ammonium) mono-lower alkylamino- or di-lower alkylamino-lower alkyl acrylates or methacrylates, allyl alcohol and the like.

Specific hydrophilic monomers include 2-hydroxyethyl methacrylate, 2-hydroxyethyl acrylate, acrylamide, methacrylamide, N,N-dimethylacrylamide, allyl alcohol, vinyl pyridine, N-vinyl-2-pyrrolidone, glycerol methacrylate, N-(1,1-dimethyl-3-oxobutyl)-acrylamide, and the like.

Preferred hydrophobic monomers are methyl methacrylate and vinyl acetate.

Preferred hydrophilic monomers are 2-hydroxyethyl methacrylate, N-vinyl-2-pyrrolidone, and acrylamide.

Optionally, an additional conventional polyreactive crosslinking agent may be added, such as allyl compounds, e.g. allyl methacrylate, diallyl itaconate, monoallyl itaconate, diallyl maleate, diallyl fumarate, diallyl succinate, diallyl phthalate, triallyl cyanurate, triallyl isocyanurate, diethylene glycol bis-allyl carbonate, triallyl phosphate, triallyl trimellitate, allyl ether, N,N-diallylmelamine, vinyl compounds, e.g. divinyl benzene, N,N'-methylene-bis-acrylamide, ethylene glycol dimethacrylate, neopentyglycol dimethacrylate, tetraethylene glycol dimethacrylate, hexamethylene-bis-maleimide, divinyl urea, bisphenol A bis-methacrylate, divinyl adipate, glycerin trimethacrylate, trimethylolpropane triacrylate, trivinyl trimellitate, 1,5-pentadiene, 1,3-bis-(4-methacryloxybutyl) tetramethyl disiloxane, divinyl ether and divinyl sulfone; hydroxyl reactive compounds such as polyvalent isocyanates e.g. hexamethylene diisocyanate, isophorone diisocyanate, toluene diisocyanate, polyaldehydes e.g. glutaraldehyde and glyoxal; polyacids e.g. glutaric acid and oxalic acid; polyepoxides e.g. butane diepoxide, vinylcyclohexane dioxide and butanediol diglycidyl ether; polyols (acid catalysis) e.g. dimethylol urea and dimethylol urea and diethylene glycol.

When employed, 0.01 to 10 weight percent of crosslinking agent, based upon the weight formula I derivative, may be present, preferably 0.01 to 5 percent, most preferably 0.05 to 2 weight percent.

The resultant contact lenses are optically clear strong, flexible, highly oxygen permeable and wettable. Further, the instant lenses are characterized by their ease of manufacture.

The following examples are presented for the purpose of illustration only and are not to be construed to limit the nature or scope of the instant invention in any manner whatsoever. Temperatures are in degree Celsius.

Example 1:

Preparation of HEC-IEM Macromer

Dimethyl sulfoxide (95.00 g) is vigorously stirred in a 300 ml three-necked round bottomed flask equipped with nitrogen inlet, reflux condenser, and mechanical stirring apparatus. Hydroxyethyl cellulose, CELLOSIZE HEC, Union Carbide, MW 120,000 (5.00 g) is dispersed in the solvent and subsequently dissolved at 60°C. After cooling to room temperature, 2-isocyanatoethyl methacrylate (2.09 g, 22.4 mole %; these 22.4 % are calculated with respect to the moles of hydroxyl group on the HEC; i.e. 22.4 % of all hydroxyls) is added to the vigorously stirred solution. Completion of the reaction is evidenced by the disappearance of the NCO absorption at 2270 $cm^{-1}$. The clear, viscous solution product is stored at room temperature under nitrogen.

Examples 2-10:

The macromer synthesis described in example 1 is repeated using varying amounts of 2-isocyanatoethyl methacrylate (IEM):

| Example | IEM (g) | Mole %* |
|---|---|---|
| 2 | 0.93 | 10.0 |
| 3 | 1.21 | 13.0 |
| 4 | 1.55 | 16.7 |
| 5 | 1.67 | 18.0 |
| 6 | 2.23 | 24.0 |
| 7 | 2.51 | 27.0 |
| 8 | 3.10 | 33.3 |
| 9 | 3.72 | 40.0 |
| 10 | 4.65 | 50.0 |

* with respect to the moles of hydroxyl group present on the HEC.

Example 11:

20 g of the macromer solution in dimethyl sulfoxide of example 1 (22.41 mole % IEM) is stirred under nitrogen with methyl methacrylate (MMA) (0.604 g, 30 % with respect to HEC-IEM solids) and 8.00 mg benzoin methyl ether. The solution is poured into 5" (12.7 cm) square, 0.5 mm thick, glass molds lined with MYLAR® film and irradiated for six hours with two 15 watt BLACK RAY UV light bulbs. The solvent swollen crosslinked polymer is extracted three times with 60°C distilled water to give a clear, highly wettable hydrogel with the following properties:

| | |
|---|---|
| Modulus | 145 (Dynes/cm$^2$ x $10^{-5}$) |
| Stress | 67 (Dynes/cm$^2$ x $10^{-5}$) |
| Elongation | 46 % |
| $H_2O$ Content | 81 % |

Examples 12-23:

| Example | Mole % IEM based on OH Groups in HEC | % MMA by Weight | Stress * | Modulus * | Elongation (%) | $H_2O$ Content (%) |
|---|---|---|---|---|---|---|
| 12 | 18 | 27 | 54 | 104 | 46 | 89 |
| 13 | 18 | 40 | 96 | 187 | 48 | 85 |
| 14 | 18 | 50 | 105 | 197 | 53 | 79 |
| 15 | 18 | 60 | 162 | 281 | 53 | 70 |
| 16 | 18 | 70 | 306 | 626 | 53 | 63 |
| 17 | 24 | 20 | 77 | 162 | 55 | 85 |
| 18 | 24 | 30 | 106 | 204 | 50 | 76 |
| 19 | 24 | 40 | 125 | 294 | 54 | 65 |
| 20 | 27 | 25 | 86 | 217 | 42 | 78 |
| 21 | 27 | 30 | 124 | 263 | 61 | 74 |
| 22 | 27 | 35 | 138 | 275 | 51 | 71 |
| 23 | 27 | - | 114 | 366 | 23 | 91 |

* $Dynes/cm^2 \times 10^{-5}$

Example 24:

20 g of the macromer solution in dimethyl sulfoxide of example 1 is stirred under nitrogen with methyl methacrylate (0.604 g), and 8.00 mg benzoin methyl ether as described in example 11. Four drops of the resulting solution is added to each of twenty poly(propylene) lens molds under nitrogen, capped, and then irradiated for six hours with two 15 watt BLACK RAY UV light bulbs. The solvent swollen crosslinked lenses are dropped into 60°C distilled water. The extracted lenses sink to the bottom of the flask to give clear, highly wettable, strong contact lenses.

## Claims

1. A hydrogel contact lens consisting essentially of an organic aprotic solvent-insoluble highly wettable polymer which is the copolymerization product of

   (A) a derivative of hydroxyethyl cellulose, with a degree of substitution (D.S.) value of 0.5 to 3.0 and a molar substitution (M.S.) value of 1.5 to 3.0, and having a weight average molecular weight of at least 10,000, containing between 0.5 and 90 percent, based on the total number of hydroxyl groups on said hydroxyethyl cellulose, of a repeating structural unit of the formula I

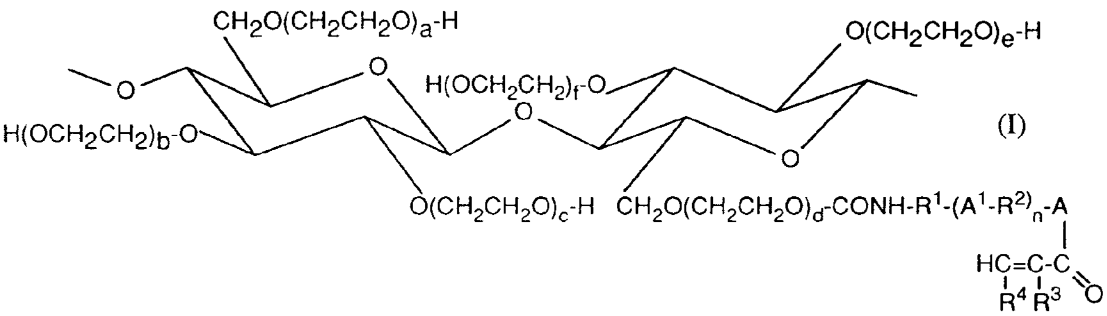

(I)

wherein

a+b+c+d+e+f≧3, with a urethane bond at any one or more of the six possible hydroxyl positions,
$R^1$ and $R^2$ are independently straight or branched chain alkylene of 2 to 8 carbon atoms, arylene of 6 to 12 carbon atoms, a saturated cycloaliphatic divalent group of 6 to 15 carbon atoms, aralkylene of 7 to 14 carbon atoms, or aralkarylene of 13 to 16 carbon atoms;
n is 0 or 1;
$A^1$ is -NH-CO-O- or -NH-CO-NR'- where R' is hydrogen or lower alkyl;
A is -O-,-NH- or -NH-CO-NR"- where R" is hydrogen or lower alkyl;
$R^3$ is hydrogen or methyl; and
$R^4$ is hydrogen, methyl or $-COOR^5$ where $R^5$ is hydrogen or lower alkyl;
with the proviso that if R3 is methyl, $R^4$ is hydrogen;
and (B) a vinylic monomer
where for each repeating structural unit of formula I there are 0.01 to 80 repeating structural units derived from the vinylic monomer;
wherein lower alkyl has up to seven carbon atoms.

**2.** A contact lens according to claim 1 wherein the vinylic monomer of component (B) is selected from the group consisting of

(a) hydrophilic monomers selected from hydroxy substituted lower alkyl acrylates and methacrylates, acrylamide and methacrylamide, $C_1$ to $C_2$ lower alkyl acrylamide and methacrylamide, ethoxylated acrylates and methacylates, hydroxy substituted lower alkyl acrylamide and methacrylamide, hydroxy substituted lower alkyl vinyl ethers, sodium ethylene sulfonate, sodium styrene sulfonate, 2-acrylamido-2-methylpropanesulfonic acid, N-vinyl pyrrole, N-vinyl-succinimide, N-vinyl-pyrrolidone, 2- and 4-vinyl pyridine, acrylic acid, methacrylic acid, (amino and quaternary ammonium)-(mono- or di-) lower alkylamino-lower alkyl-(acrylates and methacrylates), and allyl alcohol;

(b) hydrophobic monomers selected from $C_1$ to $C_{18}$ alkyl acrylates and methacrylates, $C_8$ to $C_{18}$ alkyl acrylamides and methacrylamides, acrylonitrile, methacrylonitrile, vinyl $C_1$ to $C_{18}$ alkanoates, $C_2$ to $C_{18}$ alkenes, $C_2$ to $C_{18}$ haloalkenes, styrene, $C_1$ to $C_6$ alkyl styrenes, vinyl alkyl ethers wherein the alkyl portion has 1 to 6 carbon atoms, $C_3$ to $C_{12}$ perfluoroalkyl-ethyl-thiocarbonylaminoethyl acrylates and methacrylates, $C_3$ to $C_{12}$-fluoroalkyl acrylates and methacrylates, acryloxy and metacryloxy-alkyl-siloxanes, N-vinyl carbazole, and $C_1$ to $C_{12}$ alkyl esters of maleic, fumaric, itaconic, and mesaconic acids; and

(c) mixtures of (a) and (b).

**3.** A contact lens according to claim 1, wherein n is zero.

**4.** A contact lens according to claim 1, wherein the polymer contains between 0.5 and 30 units derived from the vinylic monomer per each unit of formula I.

**5.** A contact lens according to claim 4 wherein the polymer contains between 2 and 20 units derived from the vinylic monomer per each unit of formula I.

**6.** A contact lens according to claim 4, where $R^1$ and $R^2$ are alkylene of 2 to 6 carbon atoms.

**7.** A contact lens according to claim 6, wherein n is zero and A is -O-.

**8.** A contact lens according to claim 7 wherein R1 is ethylene.

9. A contact lens according to claim 4, wherein the polymer contains from at least 1 percent to 50 percent of units of formula I, based on the number of hydroxyl groups on the hydroxyethyl cellulose.

10. A contact lens according to claim 8, wherein the hydroxyethyl cellulose contains at least 1 to 50 percent units of formula I based upon the number of hydroxyl groups on said hydroxyethyl cellulose, which are reacted with 0.5 to 30 units based upon the units of formula I of either a hydrophobic vinylic monomer or, a mixture of hydrophobic and hydrophilic vinylic monomers containing at least 50 percent by weight of hydrophobic monomer based upon the total weight of said vinylic monomers.

11. A contact lens according to claim 1 wherein $R^3$ is methyl and $R^4$ is hydrogen.

12. A contact lens according to claim 1 wherein component (A) is a derivative of hydroxyethyl cellulose containing between 10 and 50 %, based on the total number of hydroxyl groups on said hydroxyethyl cellulose, of a repeating structural unit of the formula I where $R^1$ is ethylene, n is 0 (zero), A is -O- (oxa), $R^3$ is methyl and $R^4$ is hydrogen.

13. A contact lens according to claim 12 wherein component (A) is a derivative of hydroxyethyl cellulose containing 12 to 27 % of repeating structural unit of formula I.

14. A contact lens according to claim 12 wherein component (B) is a $C_1$ to $C_{18}$ alkyl acrylate or methacrylate.

15. A contact lens according to claim 12 wherein component (B) is methyl methacrylate.

## Patentansprüche

1. Hydrogelkontaktlinse im wesentlichen bestehend aus einem stark benetzbaren, in einem aprotischen Lösungsmittel unlöslichen, organischen Polymer, das ein Copolymerisationsprodukt darstellt von
(A) einem Derivat von Hydroxyethylcellulose mit einem Substitutionsgrad-(DS)-Wert von 0,5 bis 3,0 und einem molaren Substitutions-(MS)-Wert von 1,5 bis 3,0 und mit einem gewichtsdurchschnittlichen Molekulargewicht von mindestens 10000, das zwischen etwa 0,5 und 90 %, bezogen auf die Gesamtzahl der Hydroxylgruppen an der Hydroxyethylcellulose, die wiederholende Einheit der Formel I

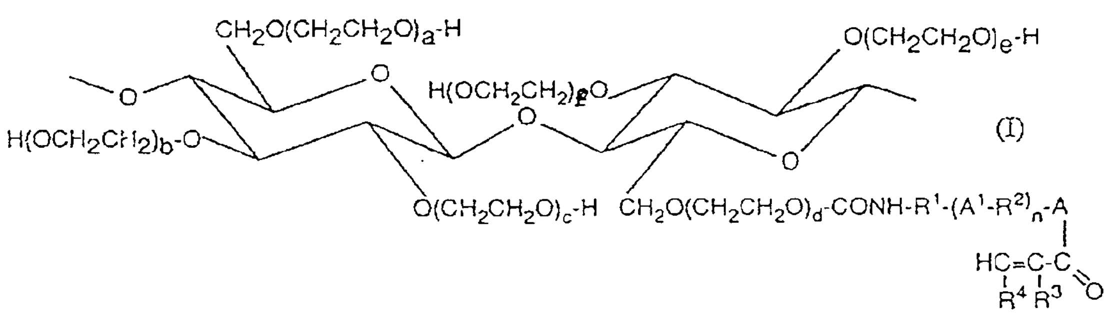

(I)

enthält, worin a+b+c+d+e+f≧3 ist, mit einer Urethanbindung an einer oder mehreren der sechs möglichen Hydroxylstellungen,

$R^1$ und $R^2$ unabhängig voneinander gerad- oder verzweigtkettig Alkylen mit 2 bis 8 Kohlenstoffatomen, Arylen mit 6 bis 12 Kohlenstoffatomen, eine gesättigte cycloaliphatische zweiwertige Gruppe mit 6 bis 15 Kohlenstoffatomen, Aralkylen mit 7 bis 14 Kohlenstoffatomen oder Aralkarylen mit 13 bis 16 Kohlenstoffatomen, bedeuten;

n 0 oder 1 ist;

$A^1$ -NH-CO-O- oder -NH-CO-NR'- bedeutet, worin R' ein Wasserstoffatom oder Niederalkyl darstellt;

A -O-, -NH- oder -NH-CO-NR"- bedeutet, worin R" ein Wasserstoffatom oder Niederalkyl darstellt;

$R^3$ ein Wasserstoffatom oder Methyl bedeutet; und

$R^4$ ein Wasserstoffatom, Methyl oder -COOR$^5$ darstellt, wobei $R^5$ ein Wasserstoffatom oder Niederalkyl darstellt;

mit der Maßgabe, daß wenn $R^3$ eine Methylgruppe darstellt, $R^4$ ein Wasserstoffatom bedeutet; und (B) einem Vinylmonomer,

wobei für jede wiederholende Struktureinheit von Formel I 0,01 bis 80 wiederholende von dem Vinylmonomer abgeleitete Struktureinheiten vorliegen, worin Niederalkyl bis zu 7 Kohlenstoffatome aufweist.

2. Kontaktlinse nach Anspruch 1, wobei das Vinylmonomer von Bestandteil (B) ausgewählt ist aus der Gruppe

   (a) hydrophile Monomeren, ausgewählt aus hydroxysubstituierten Niederalkylacrylaten und -methacrylaten, Acrylamid, Methacrylamid, $C_1$ bis $C_2$-Niederalkylacrylamid und -methacrylamid, ethoxylierten Acrylaten und -methacrylaten, hydroxysubstituiertem Niederalkylacrylamid und -methacrylamid, hydroxysubstituierten Niederalkylvinylethern, Natriumethylensulfonat, Natriumstyrolsulfonat, 2-Acrylamido-2-methylpropansulfonsäure, N-Vinylpyrrol, N-Vinylsuccinimid, N-Vinylpyrrolidon, 2- und 4-Vinylpyridin, Acrylsäure, Methacrylsäure, (Amino- und quaternären Ammonium)-(mono- oder di)-Niederalkylamino-Niederalkyl(acrylaten oder -methacrylaten) und Allylalkohol.
   (b) hydrophobe Monomeren, ausgewählt aus $C_1$ bis $C_{18}$-Alkylacrylaten und Methacrylaten, $C_8$ bis $C_{18}$-Alkylacrylamiden und -methacrylamiden, Acrylnitril, Methacrylnitril, Vinyl- $C_1$ bis $C_{18}$-aliphatischen Carbonsäuresalzen, $C_2$ bis $C_{18}$-Alkenen, $C_2$ bis $C_{18}$-Halogenalkenen, Styrol, $C_1$ bis $C_6$-Alkylstyrolen, Vinylalkylethern, worin der Alkylanteil 1 bis 6 Kohlenstoffatome aufweist, $C_3$ bis $C_{12}$-Perfluoralkylethylthiocarbonylaminoethylacrylaten und -methacrylaten, $C_3$ bis $C_{12}$-Fluoralkylacrylaten und -methacrylaten, Acryloxy- und -methacryloxyalkylsiloxanen, N-Vinylcarbazol, $C_1$ bis $C_{12}$-Alkylestern von Malein-, Fumar-, Itacon-, und Mesaconsäuren; und
   (c) Gemischen von (a) und (b).

3. Kontaktlinse nach Anspruch 1, wobei n Null ist.

4. Kontaktlinse nach Anspruch 1, wobei das Polymer zwischen 0,5 und 30 von dem Vinylmonomer abgeleitete Einheiten pro jeweilige Einheit von Formel I enthält.

5. Kontaktlinse nach Anspruch 4, wobei das Polymer zwischen 2 und 20 von dem Vinylmonomer abgeleitete Einheiten pro jeweilige Einheit von Formel I enthält.

6. Kontaktlinse nach Anspruch 4, wobei $R^1$ und $R^2$ Alkylen mit 2 bis 6 Kohlenstoffatomen darstellen.

7. Kontaktlinse nach Anspruch 6, wobei n Null ist und A -O- darstellt.

8. Kontaktlinse nach Anspruch 7, wobei $R^1$ Ethylen bedeutet.

9. Kontaktlinse nach Anspruch 4, wobei das Polymer mindestens 1 bis 50 % an Einheiten nach Formel I, bezogen auf die Anzahl an Hydroxylgruppen an der Hydroxyethylcellulose, enthält.

10. Kontaktlinse nach Anspruch 8, wobei die Hydroxyethylcellulose mindestens 1 bis 50 % Einheiten nach Formel I, bezogen auf die Anzahl an Hydroxylgruppen an der Hydroxyethylcellulose, enthält, die mit 0,5 bis 30 Einheiten, bezogen auf die Einheiten nach Formel I, entweder eines hydrophoben Vinylmonomers oder eines Gemisches von hydrophoben und hydrophilen Vinylmonomeren mit mindestens 50 Gew.-% hydrophobem Monomer, bezogen auf das Gesamtgewicht der Vinylmonomere, umgesetzt werden.

11. Kontaktlinse nach Anspruch 1, wobei $R^3$ Methyl bedeutet und $R^4$ ein Wasserstoffatom darstellt.

12. Kontaktlinse nach Anspruch 1, wobei Bestandteil (A) ein Derivat von Hydroxyethylcellulose ist, das, bezogen auf die Gesamtzahl an Hydroxylgruppen an der Hydroxyethylcellulose, zwischen 10 und 50 % einer wiederholenden Struktureinheit nach Formel I enthält, worin $R^1$ Ethylen bedeutet, n 0 (Null) ist, A -O- (Oxa) bedeutet, $R^3$ Methyl bedeutet und $R^4$ ein Wasserstoffatom darstellt.

13. Kontaktlinse nach Anspruch 12, wobei Bestandteil (A) ein Derivat von Hydroxyethylcellulose ist, das 12 bis 27 % der sich wiederholenden Struktureinheit von Formel I enthält.

14. Kontaktlinse nach Anspruch 12, wobei Bestandteil (B) ein $C_1$ bis $C_{18}$-Alkylacrylat oder -methacrylat ist.

15. Kontaktlinse nach Anspruch 12, wobei Bestandteil (B) Methylmethacrylat ist.

## Revendications

1. Lentille de contact en un hydrogel, constitué essentiellement d'un polymère à grande mouillabilité, insoluble dans les solvants aprotiques organiques, qui est le produit de la copolymérisation
(A) d'un dérivé de l'hydroxyéthylcellulose, avec un degré de substitution (D.S) de 0,5 à 3,0 et une substitution molaire (M.S) de 1,5 à 3,0 et ayant une masse moléculaire moyenne en masse d'au moins 10.000, contenant d'environ 0,5 à 90 %, par rapport au nombre total des groupes hydroxyle de l'hydroxyéthylcellulose, d'un motif structural répétitif de formule I

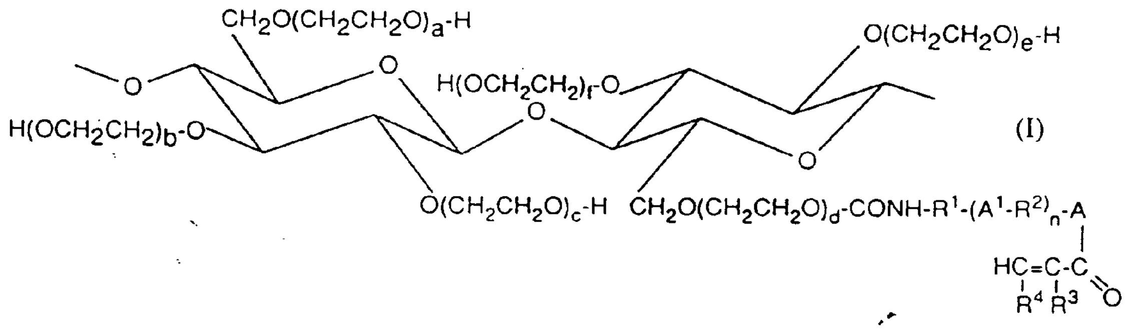

(I)

dans laquelle
$a + b + c + d + e + f \geqq 3$, avec une liaison uréthanne sur l'une ou plusieurs quelconques des six positions hydroxyle possibles,
$R^1$ et $R^2$, indépendamment l'un de l'autre, sont chacun un radical alkylène à chaîne droite ou ramifiée ayant de 2 à 8 atomes de carbone, arylène ayant de 6 à 12 atomes de carbone, un groupe divalent cycloaliphatique ayant de 6 à 15 atomes de carbone, aralkylène ayant de 7 à 14 atomes de carbone ou aralkarylène ayant de 13 à 16 atomes de carbone,
n vaut 0 ou 1 ;
$A^1$ est -NH-CO-O- ou -NH-CO-NR'- où R' est un hydrogène ou un radical alkyle inférieur ;
A est -O-, -NH- ou -NH-CO-NR" - où R" est un hydrogène ou un radical alkyle inférieur ;
$R^3$ est un hydrogène ou le radical méthyle ; et
$R^4$ est un hydrogène ou le radical méthyle, ou encore - $COOR^5$, où $R^5$ est un hydrogène ou un radical alkyle inférieur ;
à condition que $R^4$ soit un hydrogène si $R^3$ est le radical méthyle ; et
(B) d'un monomère vinylique,
où pour chaque motif structural répétitif de formule I il y a de 0,01 à 80 motifs structuraux répétitifs dérivés du monomère vinylique ;
où le radical alkyle inférieur a jusqu'à sept atomes de carbone.

2. Lentille de contact selon la revendication 1, dans laquelle le monomère vinylique du constituant (B) est choisi parmi l'ensemble comprenant :
(a) les monomères hydrophiles, choisis parmi l'ensemble comprenant les acrylates et méthacrylates d'alkyle inférieur substitués par un groupe hydroxy, l'acrylamide, le méthacrylamide, les (alkyl inférieur en $C_1$-$C_2$)-acrylamides et méthacrylamides, les acrylates et méthacrylates éthoxylés, les (alkyl inférieur) acrylamides et méthacrylamides hydroxyle, les oxydes d'alkyle inférieur hydroxyle et de vinyle, l'éthylènesulfonate de sodium, le styrènesulfonate de sodium, l'acide 2-acrylamido-2-méthylpropanesulfonique, le N-vinylpyrrole, le N-vinylsuccinimide, la N-vinylpyrrolidone, la 2- et la 4-vinylpyridine, l'acide acrylique, l'acide méthacrylique, les acrylates ou méthacrylates d'amino (le terme amino englobant l'ammonium quaternaire)-mono-(alkylamino inférieur)- ou di-(alkylamino inférieur)-(alkyle inférieur), et l'alcool allylique;
(b) les monomères hydrophobes, choisis parmi l'ensemble comprenant les acrylates et méthacrylates d'alkyle en $C_1$ à $C_{18}$, de préférence les acrylates et les méthacrylates en $C_1$ à $C_7$, les (alkyle en $C_1$ à $C_{18}$)-acrylamides et méthacrylamides, l'acrylonitrile, le méthacrylonitrile, les vinyles (alcanoates en $C_1$ à $C_{18}$), les alcènes en $C_2$ à $C_{18}$, les halogénoalcènes en $C_2$ à $C_{18}$, le styrène, les (alkyle en $C_1$ à $C_6$) styrènes, les oxydes de vinyle et d'alkyle dont le fragment alkyle a de 1 à 6 atomes de carbone, les acrylates et méthacrylates de (perfluoralkyle en $C_3$ à $C_{12}$)-éthylthiocarbonylaminoéthyle, les acrylates

et méthacrylates de fluoroalyl en $C_3$ à $C_{12}$, les acryloxy- et méthacryloxyalkyl-siloxanes, le N-vinylcarbazole, les esters alkyliques en $C_1$ à $C_{12}$ des acides maléiques, fumariques, itaconiques et mésaconiques ; et
(c) les mélanges de (a) et de (b).

**3.** Lentille de contact selon la revendication 1, dans laquelle n vaut 0.

**4.** Lentille de contact selon la revendication 1, dans laquelle le polymère contient de 0,5 à 30 motifs dérivés du monomère vinylique par motif de formule I.

**5.** Lentille de contact selon la revendication 4, dans laquelle le polymère contient de 2 à 20 motifs dérivés du monomère vinylique par motif de formule I.

**6.** Lentille de contact selon la revendication 4, dans laquelle $R^1$ et $R^2$ sont chacun un radical alkylène ayant de 2 à 6 atomes de carbone.

**7.** Lentille de contact selon la revendication 6, dans laquelle n vaut 0 et A est -O-.

**8.** Lentille de contact selon la revendication 7, dans laquelle $R^1$ est le radical éthylène.

**9.** Lentille de contact selon la revendication 4, dans laquelle le polymère contient d'au moins 1 à 50 % de motifs de formule I par rapport au nombre des groupes hydroxyle se trouvant sur l'hydroxyéthylcellulose.

**10.** Lentille de contact selon la revendication 8, dans laquelle l'hydroxyéthylcellulose contient d'au moins 1 à 50 % de motifs de formule I par rapport au nombre de groupes hydroxyle se trouvant sur l'hydroxyéthylcellulose, que l'on fait réagir avec 0,5 à 30 motifs, par motif de formule I, d'un monomère vinylique hydrophobe ou d'un mélange de monomères vinyliques hydrophobes et hydrophiles contenant au moins 50 % en poids du monomère hydrophobe, par rapport au poids total des monomères vinyliques.

**11.** Lentille de contact selon la revendication 1, dans laquelle $R^3$ est le radical méthyle et $R^4$ est un hydrogène.

**12.** Lentille de contact selon la revendication 1, dans laquelle le constituant (A) est un dérivé de l'hydroxyéthylcellulose contenant de 10 à 50 %, par rapport au nombre total des groupes hydroxyle se trouvant sur l'hydroxyéthylcellulose, d'un motif structural répétitif de formule I, dans laquelle $R^1$ est le radical éthylène, n vaut 0, A est -O-(oxa), $R^3$ est le radical méthyle et $R^4$ est un hydrogène.

**13.** Lentille de contact selon la revendication 12, dans laquelle le constituant A est un dérivé de l'hydroxyéthylcellulose contenant de 12 à 27 % du motif structural répétitif de formule I.

**14.** Lentille de contact selon la revendication 12, dans laquelle le constituant (B) est un acrylate ou méthacrylate d'alkyle en $C_1$ à $C_{18}$.

**15.** Lentille de contact selon la revendication 2, dans laquelle le constituant (B) est le méthacrylate de méthyle.